# EUROPÄISCHE PATENTANMELDUNG

(11) **EP 2 733 166 A1**
(43) Veröffentlichungstag der Anmeldung: **21.05.2014**
(21) Anmeldenummer: 12193425.1
(22) Anmeldetag: 20.11.2012
(51) Int. Cl.: C08K 3/06, C08L 25/04

(54) **Verfahren zur herstellung von expandierbaren styrolpolymergranulaten und styrolpolymerschaumstoffen mit verringertem restmonomerengehalt**

(71) Anmelder: BASF SE, 67056 Ludwigshafen (DE)
(72) Erfinder: Däschlein, Christian, 68199 Mannheim (DE); Fuchs, Sabine, 68167 Mannheim (DE); Hahn, Klaus, 67281 Kircheim (DE); Fischer, Horst, 67454 Hassloch (DE)

(57) **Zusammenfassung**

Ein Verfahren zur Herstellung von expandierbaren Styrolpolymergranulaten und Extrusionsschaumstoffen auf Basis von Styrolpolymeren mit niedrigem Restmonomergehalt, bei dem elementarer Schwefel oder einer oder mehrerer Schwefelverbindungen in eine Styrolpolymerschmelze bei einer Temperatur im Bereich von 170 bis 220 °C eingearbeitet wird, sowie die nach diesem Verfahren erhältlichen expandierbaren Styrolpolymerisate oder Extrusionsschaumstoffe.

## Beschreibung

Die vorliegende Erfindung betrifft ein Verfahren zur Herstellung von expandierbaren Styrolpolymergranulaten und Extrusionsschaumstoffen auf Basis von Styrolpolymeren mit verringertem Restmonomerengehalt.

In vielen Anwendungen, insbesondere im Bereich der Lebensmittelverpackung, wird auf einen niedrigen Restmonomerengehalt in den eingesetzten Polymeren geachtet. Dies betrifft insbesondere niedermolekulare, flüchtige Verbindungen, wie monomeres Styrol, Ethylbenzol, Acrylnitril oder alpha-Methylstyrol.

Die WO 2003/106544 schlägt vor, zur Verringerung des Styrolmonomerengehaltes und/oder Restlösungsmittel, wie Ethylbenzol, im Verfahren zur Herstellung von expandierbaren Styrolpolymerisaten durch Schmelzeimprägnierung die aus einem Polymerisationsreaktor kommende Styrolpolymerschmelze direkt einzusetzen und vor der Treibmittelimprägnierung eine Hochentgasung mittels Schleppmitteln vorzusehen oder alternativ anionisch polymerisierte Styrolpolymere einzusetzen.

Aus der DE 1 694 945 ist ein Verfahren zur Herstellung von schwer entflammbaren Schaumstoffen bekannt, bei dem Schwefel mit vorgeschäumten Polystyrolperlen vermischt und zu Schaumstoffformkörpern verschweißt werden.

In Polymer Degradation and Stability 93 (2008) 1664 - 1673 beschreiben M. Beach et al den Polymerabbau von Polystyrol aufgrund des Zusatzes verschiedener Flammschutzmittel wie HBCD und Schwefel. Polystyrolschaumstoffe wurden nicht untersucht.

Die EP 0 806 451 und WO 99/10429 beschreiben flammgeschützte Styrolpolymerzusammensetzungen, die eine Kombination von organischen Phosphorverbindungen und elementarem Schwefel enthalten, wobei der Schwefel im Unterschuss eingesetzt wird.

Die Verwendung von elementarem Schwefel als Flammschutzsynergist in Verbindung mit Phosphorverbindungen als Flammschutzmittel in Polymerschaumstoffen ist beispielsweise in WO 2011/083009 und WO 2011/095540 beschrieben.

Die WO 2011/121001 und WO 2012/089667 beschreiben die Verwendung von speziellen Schwefelverbindungen als Flammschutzsynergisten.

Die Verwendung von Schwefelverbindungen oder elementarem Schwefel als Flammschutzsynergisten kann unter den Bedingungen der Einarbeitung in das Polymer zur Bildung stark riechender Nebenprodukte, wie Schwefelwasserstoff, Schwefeldioxid, Mercaptanen, Sulfiden oder Thiolen führen, die durch den Abbau der übrigen Flammschutzmittelkomponenten noch verstärkt werden können.

Aufgabe der vorliegenden Erfindung war es, den genannten Nachteilen abzuhelfen und ein Verfahren zur Herstellung von expandierbaren Styrolpolymergranulaten oder Extrusionsschaumstoffen auf Basis von Styrolpolymeren mit verringertem Restmonomerengehalt bereitzustellen, welches die Verarbeitungs- und mechanischen Eigenschaften der Schaumstoffe nicht beeinträchtigt.

Die Aufgabe wurde durch ein Verfahren zur Herstellung von expandierbaren Styrolpolymergranulaten oder Extrusionsschaumstoffen auf Basis von Styrolpolymeren gelöst, wobei elementarer Schwefel oder ein oder mehrere Schwefelverbindungen in eine Styrolpolymerschmelze bei einer Temperatur im Bereich von 170 bis 220°C eingearbeitet werden.

Als Styrolpolymere können Polystyrol (GPPS), Schlagzähpolystyrol (HIPS), anionisch polymerisiertes Polystyrol oder Schlagzähpolystyrol (A-IPS), Styrol-α-Methylstyrol-Copolymere (SAM), Acrylnitril-Butadien-Styrolpolymerisate (ABS), Styrol-Acrylnitril-Copolymere (SAN), Acrylnitril-Styrol-Acrylester-Copolymere (ASA), Methyacrylat-Butadien-Styrol-Copolymere (MBS), Methylmethacrylat-Acrylnitril-Butadien-Styrol-Copolymere (MABS), Styrol-Maleinsäureanhydrid-Copolymere (SMA), Styrol-Phenylmaleinsäureimid-Copolymere (SPMI), Styrol-Maleinsäureanhydrid-Phenylmaleinimid-Terpolymere (SMAPMI), Styrol-Acrylnitril-Maleinsäureanhydrid-Terpolymere (SANMA) oder Mischungen davon eingesetzt werden. Bevorzugt wird Polystyrol eingesetzt.

In dem erfindungsgemäßen Verfahren werden in der Regel 0,01 bis 3 Gewichtsanteile, bevorzugt 0,05 bis 1,5 Gewichtsteile, besonders bevorzugt 0,1 bis 0,2 Gewichtsteile elementarer Schwefel oder die äquivalente Menge, bezogen auf den Schwefelgehalt, der Schwefelverbindung auf 100 Gewichtsteile Styrolpolymer eingesetzt. Der Schwefelgehalt kann jedoch auf Mengen bis zu 10 Gewichtsanteilen erhöht werden, wenn lediglich auf die Reduzierung des Restmonomerengehaltes Wert gelegt wird. Niedrigere Schwefelgehalte sind aber aufgrund der geringeren Geruchsentwicklung durch Bildung von stark riechenden Schwefelverbindungen bevorzugt.

Der elementare Schwefel bzw. die Schwefelverbindungen werden erfindungsgemäß bei einer Schmelzetemperatur (Einarbeitungstemperatur) im Bereich von 170 bis 220 °C, bevorzugt im Bereich von 180 bis 215 °C, besonders bevorzugt im Bereich von 190 bis 210 °C in die Styrolpolymerschmelze eingearbeitet. Bei Temperaturen ab 220 °C erfolgt zwar weiterhin eine Verringerung des Restmonomergehaltes, diese wird jedoch von einer unerwünschten Erniedrigung des Molekulargewichtes begleitet.

Die Verweilzeit des elementaren Schwefels oder der Schwefelverbindungen in der Polymerschmelze bei der Einarbeitungstemperatur liegt in der Regel im Bereich von 10 bis 120 Minuten, bevorzugt im Bereich von 15 bis 90 Minuten, besonders bevorzugt im Bereich von 20 bis 60 Minuten. Bei Einarbeitungszeiten kleiner 10 Minuten verringert sich der Effekt, bei Einarbeitungszeiten über 120 Minuten kommt es vermehrt zum unerwünschten Molekulargewichtsabbau des Polymers.

Als Schwefelverbindungen werden bevorzugt polymere Schwefelverbindungen alleine oder in Mischung mit elementarem Schwefel eingesetzt. Bevorzugte Schwefelverbindungen sind Disulfide der Formel (I):

A¹ -(Z¹)ₘ - (S)ₙ -(Z²)ₚ- A² (I)

wobei die Symbole und Indizes folgende Bedeutungen haben,
- A¹, A²: sind gleich oder verschieden C₆ - C₁₂ - Aryl, Cyclohexyl, Si(OR^{a})₃, ein gesättigter, teilweise ungesättigter oder aromatischer, mono oder bicyclischer Ring mit 3 bis 12 Ringgliedern, der ein oder mehrere Heteroatome aus der Gruppe N, O und S enthält, und der unsubstituiert oder durch einen oder mehrere Substituenten der Gruppe O, OH, S, SH, , COOR^{b}, CONR^{c}R^{d}, C₁-C₁₈- Alkyl, C₁-C₁₈-Alkoxy, C₁C₁₈-Thioalkyl, C₆-C₁₂-Aryl, C₆-C₁₂-Aryloxy, C₂-C₁₈-Alkenyl, C₂-C₁₈-Alkenoxy, C₂-C₁₈-Alkinyl und C₂-C₁₈-Alkinoxy substituiert ist;
- Z¹, Z²: sind gleich oder verschieden -CO- oder -CS-;
- R^{a}: ist C₁-C₁₈-Alkyl;
- R^{b}, R^{c}, R^{d}: sind gleich oder verschieden H oder C₁-C₁₈-Alkyl, Aryl, Heteroaryl;
- m, p: sind gleich oder verschieden 0 oder 1 und
- n: ist eine natürliche Zahl von 2 bis 10.
sowie polymere Schwefelverbindungen der Formel (II): 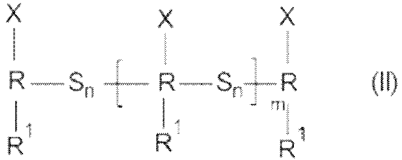 wobei die Symbole und Indizes folgende Bedeutungen haben:
- R: ist gleich oder verschieden, vorzugsweise gleich, C₆-C₁₂-Aryl, eine 5-10 gliedrige Heteroarylgruppe, die ein oder mehrere Heteroatome aus der Gruppe N,
- O und S: enthält, C₁-C₁₈-Alkyl, C₂-C₁₈-Alkenyl, C₃-C₁₈-Alkinyl oder C₃-C₁₀-Cycloalkyl;
- X: ist gleich oder verschieden, vorzugsweise gleich, OR², SR², NR²R³, COOR², CONR², SO₂R², F, Cl, Br, R, H, oder eine Gruppe -Y¹-P(Y²)ₚ R'R";
- Y¹: ist O, S oder NR"';
- Y²: ist O oder S;
- p: ist 0 oder 1;
- R', R": sind gleich oder verschieden, vorzugsweise gleich, C₁-C₁₈-Alkyl, C₂-C₁₈-Alkenyl, C₂-C₁₈-Alkinyl, C₆-C₁₂-Aryl, C₃-C₁₀-Cycloalkyl, C₆-C₁₂-Aryl-C₁-C₁₈-Alkyl, eine Heteroarylgruppe oder Heteroaryloxygruppe, die ein oder mehrere Heteroatome aus der Gruppe N, O und S enthält, O-(C₁-C₁₈)-Alkyl, O-(C₂-C₁₈)-Alkenyl, O-(C₂-C₁₀)-Alkinyl, O-(C₆-C₁₂)-Aryl, O-(C₃-C₁₀)-Cycloalkyl oder (C₆-C₁₂)-Aryl-(C₁-C₁₈)-Alkyl-O;
- R"': ist H, C₁-C₁₈-Alkyl oder (P(Y²)ₚR'R");
- R¹: ist gleich oder verschieden, vorzugsweise gleich, C₁-C₁₈-Alkyl, C₂-C₁₈-Alkenyl, C₂-C₁₈ Alkinyl, C₆-C₁₂-Aryl, C₃-C₁₀-Cycloalkyl, C₆-C₁₂-Aryl-C₁-C₁₈-Alkyl, eine Heteroarylgruppe, die die ein oder mehrere Heteroatome aus der Gruppe N, O und S enthält, O-(C₁-C₁₈)-Alkyl, O-(C₂-C₁₈)-Alkenyl, 0-(C₃-C₁₈)-Alkinyl, O-(C₆-C₁₂)-Aryl, O-(C₃-C₁₀)-Cycloalkyl, (C₆-C₁₂)-Aryl-(C₁-C₁₈)-Alkyl-O, S-(C₁-C₁₈)-Alkyl, S-(C₁-C₁₈)-Alkenyl, S-(C₂-C₁₈)-Alkinyl, S-(C₆-C₁₂)-Aryl, S-(C₃-C₁₀)-Cycloalkyl, (C₆-C₁₂)-Aryl-(C₁-C,₈)-Alkyl-S, OH, F, Cl, Br oder H;
- R², R³: sind gleich oder verschieden, vorzugsweise gleich, H, C₁-C₁₈-Alkyl, C₂-C₁₈-Alkenyl, C₂-C₁₈ Alkinyl, C₆-C₁₂-Aryl, C₃-C₁₀-Cycloalkyl, C₆-C₁₂-Aryl-C₁-C₁₈-Alkyl oder eine Heteroarylgruppe, die ein oder mehrere Heteroatome aus der Gruppe N, O und S enthält;
- n: ist eine ganze Zahl von 1 bis 8 und
- m: ist eine Zahl von 1 bis 1000.

Überraschenderweise kann die Zugabe von elementarem Schwefel oder Schwefelverbindungen in geringen Mengen zu einer Styrolpolymerschmelze den Restmonomenengehalt signifikant reduzieren, wenn sie erfindungsgemäß bei einer Temperatur im Bereich von 170 bis 220°C eingearbeitet werden. Bei Temperaturen unterhalb von 170°C wird keine signifikante Reduzierung des Restmonomerengehaltes beobachtet.

Des Weiteren können der Styrolpolymerschmelze weitere Additive, wie Keimbildner, Füllstoffe, Weichmacher, lösliche und unlösliche anorganische und/oder organische Farbstoffe und Pigmente in üblichen Mengen zugegeben werden.

Bevorzugt werden der Styrolpolymerschmelze athermane Verbindungen als IR-Absorber zugegeben. Als athermane Verbindungen eigenen sich beispielsweise synthetischer oder natürlicher Graphit, Ruß, Petrolkoks, Graphen oder Aktivkohle. Diese werden in Mengen von 0,5 bis 25 Gew.-%, bevorzugt 1 bis 15 Gew.-%, besonders bevorzugt 3 bis 8 Gew.-%, bezogen auf das Styrolpolymer, eingesetzt.

Gegenstand der Erfindung ist auch die Verwendung einer Mischung von elementarem Schwefel oder ein oder mehrerer Schwefelverbindungen zur Verringerung des Restmonomerengehaltes in Styrolpolymerschaumstoffen.

Nach dem erfindungsgemäßen Verfahren können je nach dem, wie die Styrolpolymerschmelze weiterverarbeitet wird, sowohl Partikelschaumstoffe durch Vorschäumen und Versintern von expandierbaren Styrolpolymerisaten, als auch Extrusionsschaumstoffe erhalten werden.

Die nach dem erfindungsgemäßen Verfahren erhältlichen expandierbaren Styrolpolymerisate enthalten ein Treibmittel. Als Treibmittel, eigenen sich die üblicherweise in EPS eingesetzten physikalische Treibmittel, wie aliphatische oder cycloaliphatische C₁-C₆-Kohlenwasserstoffe, Alkohole, Ketone, Ether, halogenierte Kohlenwasserstoffe oder Mischungen davon. Bevorzugt werden iso-Butan, n-Butan, iso-Pentan, n-Pentan oder Mischungen davon eingesetzt. Der Treibmittelanteil beträgt in der Regel 1 bis 15 Gew.-%, bevorzugt 2 bis 10 Gew.-%, besonders bevorzugt 3 bis 7 Gew.-%, bezogen auf das expandierbare Styrolpolymerisat.

Expandierbare Styrolpolymergranulate (EPS) lassen sich beispielsweise erhalten, wenn die Styrolpolymerschmelze nach der Einarbeitung des elementaren Schwefels bzw. der Schwefelverbindungen und gegebenenfalls athermanen Verbindungen und/oder weiteren Additiven mit einem Treibmittel, bevorzugt mit einem C₁-C₆-Kohlenwasserstoff, insbesondere n-Pentan, iso-Pentan oder Mischungen davon, imprägniert und unter Druck granuliert wird. Hierfür wird in der Regel ein Unterwassergranulator (UWG) eingesetzt. Ein derartiges Verfahren ist beispielsweise in WO 2003/106544 beschrieben.

Zur Verbesserung der Expandierbarkeit und Verringerung der Zykluszeit bei der anschließenden Formteilherstellung können die expandierbaren Styrolpolymerisate durch Zusatz von Nukleierungsmitteln, wie Talk und Hohlräume bildende Cotreibmittel, insbesondere Kohlenstoffdioxid oder Stickstoff, wie in WO 2012/062682 beschrieben, vornukleiert werden. Durch die Vornukleierung kann auch der Treibmittelanteil verringert und die Zellstruktur kontrolliert werden.

Nach einem weiteren Verfahren lassen sich expandierbare Styrolpolymergranulate erhalten, indem man die Styrolpolymerschmelze nach der Einarbeitung des elementaren Schwefels bzw. der Schwefelverbindungen und gegebenenfalls athermanen Verbindungen und/oder weiteren Additiven granuliert und die Granulate anschließend mit einem Treibmittel, bevorzugt mit einem C₁-C₆-Kohlenwasserstoff , insbesondere n-Pentan, iso-Pentan oder Mischungen davon, imprägniert. Hierfür werden die Granulate in der Regel in einer wässrigen Suspension mit dem Treibmittel in einem Druckreaktor beaufschlagt und bis knapp unter die Glasübergangstemperatur erwärmt. Wenn zusätzlich vor oder während der Treibmittelimprägnierung monomeres Styrol zudosiert wird, kann das Granulat als Saat für eine Saatpolymerisation, beispielsweise wie in WO 2010/06631 beschreiben, verwendet werden.

Die expandierbaren Styrolpolymergranulate weisen in der Regel einen mittleren Durchmesser im Bereich von 0,2 bis 2 mm auf. Zur Verbesserung der Verarbeitbarkeit können die fertigen expandierbaren Styrolpolymergranulate mit Glycerinester, Antistatika oder Antiverklebungsmittel beschichten werden. Die Dichte der Schaumstoffpartikel und der Schaumstoffblöcke liegt in der Regel im Bereich von 10 bis 100 kg/m³, bevorzugt im Bereich von 15 bis 30 kg/m³.

Die nach dem erfindungsgemäßen Verfahren erhältlichen expandierbaren Styrolpolymergranulate können in einem Vorschäumer mit Dampf oder Heißluft zu Schaumstoffpartikeln vorgeschäumt und anschließend zu Schaumstoffblöcken verarbeitet werden.

Zur Herstellung von Extrusionsschaumstoffen auf Basis von Styrolpolymeren (XPS) kann die Styrolpolymerschmelze nach der Einarbeitung des elementaren Schwefels bzw. der Schwefelverbindungen und gegebenenfalls athermanen Verbindungen und/oder weiteren Additiven mit einem Treibmittel, vorzugsweise Kohlendioxid oder HFC's und gegebenenfalls zusätzlichen Cotreibmitteln, imprägniert und unter Aufschäumen durch eine Düse extrudiert werden. Das Aufschäumen zu Schaumstoffplatten erfolgt vorzugsweise durch Extrusion in eine Umgebung unter Atmosphärendruck durch eine Schlitzdüse mit anschließendem Kalibrator.

Die nach dem erfindungsgemäßen Verfahren erhältlichen Extrusionsschaumstoffe weisen bevorzugt eine Dichte im Bereich von 10 bis 200 kg/m³, besonders bevorzugt im Bereich von 15 bis 50 kg/m³ auf. Sie sind in der Regel zu mehr als 90 %, bevorzugt zu 95 bis 100% geschlossenzellig.

Das erfindungsgemäße Verfahren ermöglicht mit geringen Schwefelanteilen eine Reduktion des Restmonomerengehaltes in Styrolpolymerschaumstoffen. Die Styrolpolymerschaumstoffe können als Verpackungsmaterial, insbesondere für Lebensmittelverpackungen, für Bauanwendungen, als Verbundformteil, in der Automobilindustrie, im Boots- und Schiffsbau, Windkraft, Wärmedämmung verwendet werden.

### Beispiele

Eingesetzte Rohstoffe:

| | |
|---|---|
| PS 158K Q4 | Polystyrol mit einem MVR (200 °C, 5 kg) von 3 ml/1 0 min und einer Vicat-Erweichungstemperatur (VST/A/50) von 106 °C (Handelsprodukt der Styrolution GmbH) |
| Pentan S | Mischung aus 80 Gew.-% n-Pentan und 20 wt% iso-Pentan der Firma Haltermann |
| Schwefel | Kommerziell erhältlich von Sigma-Aldrich |

Poly(-tert-amylphenol-disulfid): (Vultac 3, MLPC/Arkema)

### Beispiele 1 - 23 und Vergleichsversuche V1 - V5 (mechanische Homogenisierung):

10 g Polystyrol 158K Q4 wurden mit den in Tab. 1 genannten Mengen Schwefel homogen gemischt (mechanisch), und bei der angegebenen Temperatur für die angegebene Zeit im Ofen unter Schutzgasatmosphäre (N2) getempert. An den so bereitgestellten Polymermischungen wurden die Restmonomergehalte sowie die Molekulargewichte bestimmt.

Der Restmonomerengehalt wurde mittels GPC-HPLC bestimmt aus der Summe der Monomeren und flüchtigen, niedermoldekularen Verbindungen Styrol, Ethylbenzol, Cumol und α-Methylstyrol.

Die erhaltenen Proben wurden im Anschluss mit Pentan imprägniert und im Ofen bei 100°C verschäumt.

### Beispiele 24 - 35 und Vergleichsversuche V6 - V10 (Homogenisierung durch Extrusion):

Polystyrol 158K Q4 wurde bei den in Tabelle 2 angegebenen Temperaturen mit den Schwefel bzw. Poly(-*tert*-amylphenol-disulfid in einem Extruder (DSM Micro 15) für die angegebene Zeit extrudiert. Der erhaltene Polymerstrang wurde anschließend abgelassen. An der so verarbeiteten Polymermischung wurden die Restmonomergehalte sowie die Molekulargewichte bestimmt.

Aus dieser Zusammenstellung zeigt sich, dass es auch während der Extrusion durch den Zusatz von geringsten Mengen Schwefel bzw. schwefelhaltiger Verbindungen bei genau gewählten Einarbeitungstemperaturen zwischen 170 und 220 °C und Einarbeitungszeiten, bevorzugt größer 10 Minuten, zu einer signifikanten Absenkung des Monomergehaltes (v. a. Styrol) kommt.

Die erhaltenen Proben wurden im Anschluss mit Pentan imprägniert und im Druckvorschäumer mit Dampf verschäumt.

**Tabelle 1: Schwefelanteil, Einarbeitungstemperatur und Eigenschaften der Proben aus den Beispielen 1 - 23 und Vergleichsversuchen V1 - V5**

| Bsp. | Schwefel [Gew.-Teile] | Einarbeitungstemp. [°C] | Verweilzeit [min] | M_{w} [kg/mol] | Styrolgehalt [ppm] | Restmonomerengehalt [ppm] |
|---|---|---|---|---|---|---|
| V1 | - | - | - | 261 | 520 | 550 |
| V2 | - | 220 | 30 | 213 | 301 | 309 |
| V3 | - | 220 | 120 | 199 | 219 | 223 |
| V4 | - | 240 | 120 | 125 | 188 | 198 |
| V5 | - | 110 | 120 | 255 | 247 | 256 |
| 1 | 0,2 | 170 | 120 | 244 | 185 | 193 |
| 2 | 0,2 | 180 | 120 | 237 | 106 | 112 |
| 3 | 0,2 | 190 | 120 | 241 | 75 | 78 |
| 4 | 0,2 | 200 | 120 | 227 | 46 | 46 |
| 5 | 0,2 | 210 | 120 | 220 | 49 | 53 |
| 6 | 0,2 | 220 | 120 | 223 | 43 | 51 |
| 7 | 0,2 | 230 | 120 | 207 | 44 | 46 |
| 8 | 0,2 | 240 | 120 | 181 | 49 | 45 |
| 9 | 0,1 | 220 | 120 | 205 | 60 | 66 |
| 10 | 0,05 | 220 | 120 | 198 | 58 | 62 |
| 11 | 0,01 | 220 | 120 | 213 | 79 | 82 |
| 12 | 3 | 180 | 30 | 238 | 30 | 30 |
| 13 | 3 | 180 | 120 | 234 | 9 | 9 |
| 14 | 3 | 200 | 30 | 233 | 21 | 21 |
| 15 | 3 | 200 | 120 | 206 | 9 | 67 |
| 16 | 3 | 220 | 30 | 214 | 18 | 28 |
| 17 | 3 | 220 | 120 | 171 | 24 | 67 |
| 18 | 10 | 180 | 30 | 242 | 11 | 11 |
| 19 | 10 | 180 | 120 | 231 | 5 | 5 |
| 20 | 10 | 200 | 30 | 230 | 4 | 55 |
| 21 | 10 | 200 | 120 | 193 | 30 | 82 |
| 22 | 10 | 220 | 30 | 211 | 19 | 42 |
| 23 | 10 | 220 | 120 | 128 | 19 | 135 |

**Tabelle 2: Anteil an Schwefel bzw. Schwefelverbindung, Einarbeitungstemperatur und Eigenschaften der Proben aus den Beispielen 24 - 35 und Vergleichsversuchen V6 - V10**

| Bsp. | Schwefel [Gew.-Teile] | Poly(-*tert-*amylphenoldisulfid) [Gew.-Teile] | Einarbeitungstemp. [°C] | Verweilzeit [min] | Styrolgehalt [ppm] | Restmonomerengehalt [ppm] |
|---|---|---|---|---|---|---|
| V6 | | | 190 | 10 | 359 | 367 |
| V7 | | | 215 | 10 | 330 | 336 |
| V8 | | | 240 | 10 | 330 | 336 |
| V9 | | | 190 | 20 | 293 | 299 |
| V10 | | | 190 | 30 | 254 | 254 |
| 24 | 1 | | 190 | 10 | 183 | 190 |
| 25 | 1 | | 190 | 20 | 161 | 167 |
| 26 | 1 | | 190 | 30 | 107 | 107 |
| 27 | 0,5 | | 190 | 30 | 102 | 110 |
| 28 | 0,05 | | 190 | 30 | 91 | 95 |
| 29 | | 3 | 190 | 10 | 209 | 229 |
| 30 | | 3 | 215 | 10 | 153 | 218 |
| 31 | | 3 | 240 | 10 | 100 | 118 |
| 32 | | 1 | 190 | 10 | 268 | 280 |
| 33 | | 0,5 | 190 | 30 | 94 | 98 |
| 34 | | 0,05 | 190 | 30 | 90 | 105 |
| 35 | | 1 | 190 | 30 | 105 | 119 |

## Patentansprüche

1. Verfahren zur Herstellung von expandierbaren Styrolpolymergranulaten oder Extrusionsschaumstoffen auf Basis von Styrolpolymeren, **dadurch gekennzeichnet, dass** elementarer Schwefel oder eine oder mehrere Schwefelverbindungen in eine Styrolpolymerschmelze bei einer Temperatur im Bereich von 170 bis 220 °C eingearbeitet werden.

2. Verfahren nach Anspruch 1, **dadurch gekennzeichnet, dass** 0,05 - 1,5 Gewichtteile elementarer Schwefel oder die äquivalente Menge der Schwefelverbindung auf 100 Gewichtsteile Styrolpolymer eingesetzt werden.

3. Verfahren nach Anspruch 1 oder 2, **dadurch gekennzeichnet, dass** als Schwefelverbindung ein polymeres Disulfid eingesetzt wird.

4. Verfahren nach einem der Ansprüche 1 bis 3, **dadurch gekennzeichnet, dass** der elementare Schwefel oder die Schwefelverbindung bei einer Temperatur im Bereich von 190 bis 210°C eingearbeitet wird.

5. Verfahren nach einem der Ansprüche 1 bis 4, **dadurch gekennzeichnet, dass** die Verweilzeit bei der Einarbeitungstemperatur im Bereich von 10 bis 120 Minuten liegt.

6. Verfahren zur Herstellung von expandierbaren Styrolpolymergranulaten nach einem der Ansprüche 1 bis 5, **dadurch gekennzeichnet, dass** die Styrolpolymerschmelze nach der Einarbeitung des elementaren Schwefels oder der ein oder mehreren Schwefelverbindungen mit einem C₁-C₆-Kohlenwasserstoff als Treibmittel imprägniert und unter Druck granuliert wird.

7. Verfahren zur Herstellung von expandierbaren Styrolpolymergranulaten nach einem der Ansprüche 1 bis 5, **dadurch gekennzeichnet, dass** die Styrolpolymerschmelze granuliert wird und die Granulate anschließend mit einem C₁-C₆-Kohlenwasserstoff als Treibmittel imprägniert werden.

8. Verfahren zur Herstellung von Extrusionsschaumstoffen auf Basis von Styrolpolymeren nach einem der Ansprüche 1 bis 5, **dadurch gekennzeichnet, dass** die Styrolpolymerschmelze mit einem Treibmittel imprägniert und unter Aufschäumen durch eine Düse extrudiert wird.

9. Expandierbare Styrolpolymergranulate erhältlich nach den Ansprüchen 6 oder 7.

10. Verwendung von elementarem Schwefel oder ein oder mehrerer Schwefelverbindungen zur Verringerung des Restmonomerengehaltes in Styrolpolymerschaumstoffen.
